# EUROPÄISCHE PATENTSCHRIFT

(11) **EP 1 291 215 B1**
(45) Veröffentlichungstag und Bekanntmachung des Hinweises auf die Patenterteilung: **26.11.2008**
(21) Anmeldenummer: 02014512.4
(22) Anmeldetag: 01.07.2002
(51) Int. Cl.: B60J 7/02, B60J 7/22

(54) **Rahmen für ein Fahrzeugschiebedach**
Sliding roof frame for vehicle
Cadre por toit coulissant pour véhicule

(30) Priorität: 11.09.2001 DE 10144741
(43) Veröffentlichungstag der Anmeldung: 12.03.2003
(73) Patentinhaber: ArvinMeritor GmbH, 63128 Dietzenbach (DE)
(72) Erfinder: Sommer, Volker, Dipl.-Ing., 65388 Schlangenbad/Bärstadt (DE); Janda, Mathias, Produktingenieur, 61169 Friedberg (DE); Seyfarth, Steffen, Ing. Maschinenbau (FH), 63533 Mainflingen (DE)
(74) Vertreter: Oppermann, Ewald

(56) Entgegenhaltungen:
- EP-A- 1 063 114
- DE-A- 19 514 586
- US-A- 5 018 782

## Beschreibung

Die Erfindung bezieht sich auf einen Rahmen für ein Fahrzeugschiebedach entsprechend dem Oberbegriff des Patentanspruchs 1.

Unter der Bezeichnung "Fahrzeugschiebedach" oder "Schiebedach" werden hier alle unter diesem Sammelbegriff zusammenfaßbaren Bauarten verstanden, für welche die Anbringung eines Windabweisers im Bereich des vorderen Randes einer Fahrzeugdachöffnung, der ein bewegbarer Deckel zugeordnet ist, üblich und/oder sinnvoll ist, insbesondere für Schiebedächer mit nur verschiebbarem Deckel, für Schiebehebedächer mit zusätzlich ausstellbarem Deckel und für Oberfirst-Schiebedächer (Spoilerdächer) mit teilweise über die hintere feste Dachfläche verlagerbarem Deckel.

Windabweiser besitzen in der Regel nach hinten gerichtete Ausstellarme, die mit ihren hinteren Enden an den Rahmen angelenkt sind, so daß der Windabweiser bei Öffnungsverschiebungen des Deckels üblicherweise durch Federkraft getrieben aus seiner Ruhestellung in seine über den vorderen Rand der Dachöffnung nach oben aus der Dachfläche vorstehenden Ausstellage ausgestellt wird. Bei Schließverschiebungen des Deckels läuft dieser unmittelbar oder mittelbar auf die Ausstellarme auf und bewegt den Windabweiser in seine eingeschwenkte Ruhestellung.

Auch bei einem bekannten Rahmen für ein Fahrzeugschiebedach (DE 197 46 545 A1) der im Oberbegriff des Patentanspruchs 1 angegebenen Ausbildung ist ein Windabweiser zwar erwähnt, aber hinsichtlich seiner Ausbildung und Lagerung weder beschrieben noch zeichnerisch dargestellt. Regelmäßig werden Windabweiser aber an zusätzlich am Rahmen zu positionierenden und anzubringenden Lagerstellen gelagert. Daher unterliegt der Anbringungsort der Lagerstellen herstellungs- und montagebedingten Schwankungen (Fertigungstoleranzen), wodurch Funktionsstörungen im Betrieb des Schiebedaches/Windabweisers auftreten können.

Der Erfindung liegt die Aufgabe zugrunde, einen Rahmen der eingangs angegebenen Ausbildung bereitzustellen, der eine einfache, schnelle und damit kostengünstige Anbringung eines Windabweisers am Rahmen bei dennoch genauer Positionierung ermöglicht.

Diese Aufgabe löst die Erfindung auf die im Patentanspruch 1 angegebene Weise. Vorteilhafte oder zweckmäßige Weiterbildungen sind in den Unteransprüchen angegeben und werden nachfolgend ebenfalls beschrieben.

Nach dem Grundgedanken der Erfindung werden die Schwenklagerstellen für die Windabweiser-Ausstellarme bereits bei der Spritzformung des Rahmenvorderteils in das Vorderteil bzw. dessen seitliche Schenkel integriert, und zwar nicht als zusätzlich in die Spritzform einzulegende Teile, sondern werden aus dem Kunststoff des Vorderteils selbst gebildet. Die Lagerstellen unterliegen daher hinsichtlich ihrer Lokalisierung am Rahmenvorderteil keinen nennenswerten Fertigungsgenauigkeitsschwankungen, sondern lediglich den sehr geringen Spritzwerkzeugtoleranzen.

Gemäß Anspruch 2 sind die Schwenklager in den beiden seitlichen Schenkeln des Rahmenvorderteils jeweils paarweise angeordnet. Dabei befinden sich alle vier vorhandenen Schwenklager auf einer gemeinsamen rechtwinklig zur senkrechten Mittelebene des Rahmens verlaufenden Fluchtungsachse. Beide Ausstellarme des Windabweisers sind daher jeweils an zwei Lagerstellen gelagert, wobei für die beiden Ausstellarme genaue Lagerungssymmetrie vorhanden ist.

Vorteilhaft sind die rahmenseitigen Schwenklager entsprechend Anspruch 3 als einfache nach oben offene und zweckmäßig geradlinige Aufnahmenuten ausgebildet, in welche von oben her an den Enden der Windabweiser-Ausstellarme angebrachte Schwenklagerzapfen eingeführt werden, die dann an den unteren Enden der Aufnahmenuten ihre Lagerstellen finden.

Um zu vermeiden, daß die Schwenklagerzapfen in ihren Lagerstellen noch zusätzlich gegen unbeabsichtigtes Austreten aus den Aufnahmenuten zu sichern sind, d.h. niederzuhalten sind, ist in Weiterführung des Erfindungsgedankens gemäß Anspruch 4 vorgesehen, daß sich die unteren Enden der Aufnahmenuten zu zylindrischen Lageröffnungen erweitern, und daß die Schwenklagerzapfen an den Ausstellarmen einen auf die Lageröffnungen abgestimmten Durchmesser aber auch Abflachungen besitzen, welche ihre Einführung durch die engeren Aufnahmenuten ermöglichen. Werden danach durch Verschwenken der Ausstellarme die Schwenklagerzapfen in den zylindrischen Lageröffnungen verdreht, verriegeln sich die Schwenklagerstellen gewissermaßen selbsttätig.

Wenn die vorgenannten Abflachungen wie im Anspruch 5 angegeben bezogen auf die Ruhestellung des Windabweisers etwa horizontal angeordnet sind, läßt sich der Windabweiser mit etwa senkrecht nach unten gerichteten Ausstellarmen leicht mit den Schwenklagerzapfen in die Aufnahmenuten einführen und in die Lagerposition bringen. Geringfügige Verschwenkungen des Windabweisers in Richtung seiner Ruhestellung bewirken dann bereits die vorstehend beschriebene Verriegelung aller vier Schwenklager.

Wenn entsprechend Anspruch 6 der Abstand zwischen den Stirnflächen der Schwenklagerzapfen nur etwas geringer ist als der Abstand zwischen den zugehörigen Nutgrundflächen der Aufnahmenuten hat der Windabweiser an seinen Schwenklagerstellen nur ein vorteilhaft geringes Querspiel.

Um für das Rahmenvorderteil im Bereich der Schwenklager für den Windabweiser keine dickeren Wandungen vorsehen zu müssen, in welche die Schwenklager einzuformen sind, ist es von Vorteil, wenn gemäß Anspruch 7 die Schwenklager in Wandungsvorsprünge des Rahmenvorderteils eingeformt sind. Hierbei liegen Wandverdickungen nur im Bereich der Schwenklager vor.

In Weiterverfolgung des Erfindungsgedankens kann auch der Windabweiser mit seinen Ausstellarmen und den Schwenklagerzapfen einteilig aus Kunststoff geformt sein, wie aus Anspruch 8 hervorgeht. Die einteilige Spritzformung des Windabweisers ermöglicht ebenfalls eine fertigungstoleranzarme kostengünstige Herstellung dieses Bauteils.

Weitere Einzelheiten der Erfindung werden nachfolgend anhand der ein Ausführungsbeispiel darstellenden Zeichnungen näher erläutert. Darin zeigt:
- Fig. 1: eine Perspektivansicht eines Kraftfahrzeugdachs mit Schiebedach bei geschlossenem Deckel,
- Fig. 2: eine Perspektivansicht des abgebrochen dargestellten Rahmens mit Blick auf die in Fahrtrichtung gesehen vordere linke Rahmenecke,
- Fig. 3: den Schnitt entsprechend der Linie III-III in Fig. 2 mit in seiner Ruhestellung befindlichem Windabweiser,
- Fig. 4: den Schnitt entsprechend der Linie IV-IV in Fig. 2,
- Fig. 5: ein aus Fig. 3 vergrößert dargestelltes Schwenklager und
- Fig. 6: das Schwenklager aus Fig. 5, jedoch mit zwei Zwischenpositionen des Schwenklagerzapfens, die dieser vorübergehend bei der Anbringung des Windabweisers einnimmt.

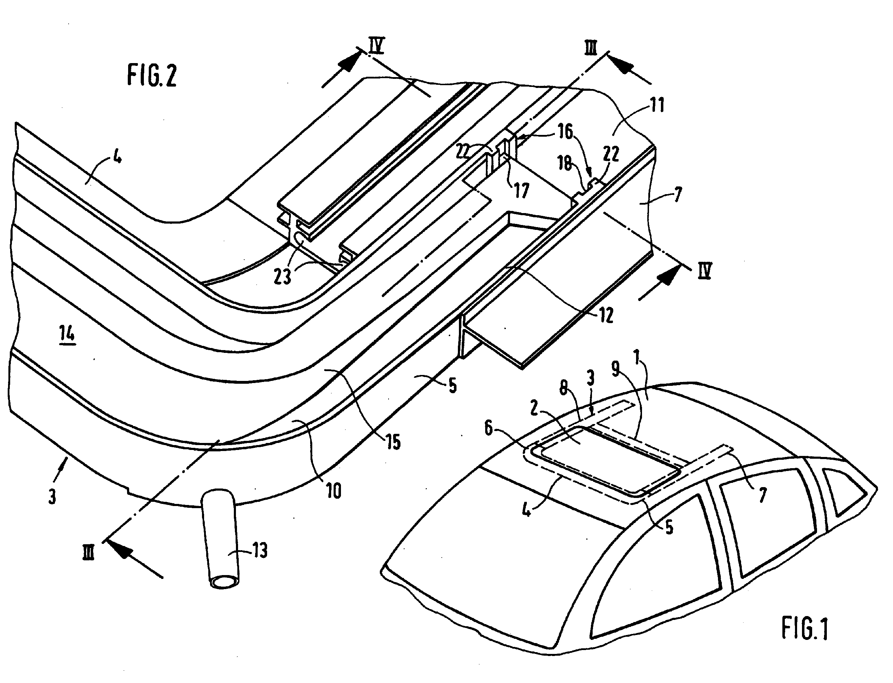

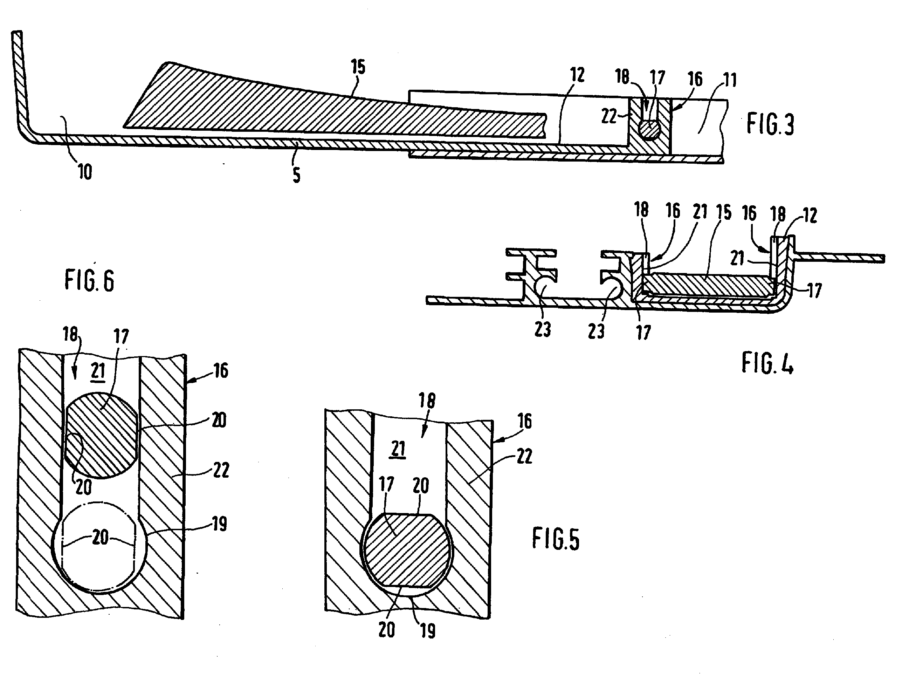

In Fig. 1 ist der unter der festen Dachfläche 1 befestigte, den Schiebedeckel 2 führende Rahmen 3 nur schematisch eingezeichnet. Er ist aus einem aus Kunststoff durch Spritzformung gebildeten Rahmenvorderteil 4 mit einteilig angeformten seitlichen Schenkeln 5 und 6, nach hinten verlaufenden mit den Schenkeln 5 und 6 verbundenen Rahmenseitenteilen 7 und 8 und einem die Rahmenseitenteile 7 und 8 miteinander aussteifend verbindenden Rahmenquerteil 9 zusammengesetzt. Wie insbesondere aus den Fig. 2 und 4 deutlich wird, sind bei diesem Ausführungsbeispiel die Rahmenseitenteile 7 und 8 aus einem Aluminiumstrangprofil durch Ablängen hergestellt.

Wie aus Fig. 2 hervorgeht, weist das Rahmenvorderteil 4 einen nach oben offenen Wasserkanal 10 auf, der sich auch über die seitlichen Schenkel 5, 6 erstreckt. An den Wasserkanal 10 schließen sich in den profilierten Rahmenseitenteilen 7, 8 ausgebildete und nach oben offene Wasserkanäle 11 an. Die seitlichen Schenkel 5, 6 bilden mit U-förmigen Profilabschnitten 12 den Wasserkanal 10. Die Profilabschnitte 12 sind mit ihren hinteren Enden formschlüssig in die Wasserkanäle 11 der Rahmenseitenteile 7, 8 eingesteckt. In den Zeichnungen ist diese Situation nur anhand der in Fahrtrichtung linken Rahmenseite dargestellt; die rechte Rahmenseite ist spiegelbildlich ausgeführt. Die Wasserkanäle 10, 11 bilden ein in sich geschlossenes wasserdichtes Kanalsystem, aus dem eingedrungenes Wasser über an den vorderen Rahmenecken angebrachte Rohrstutzen 13 abgeführt wird.

Wie aus den Fig. 2 bis 4 ersichtlich ist, nimmmt der Wasserkanal 10 im Rahmenvorderteil 4 einen Windabweiser 14 in dessen nichtausgestellter Ruhestellung auf, wobei sich die Windabweiser-Ausstellarme 15, von denen bei spiegelbildlicher Ausführung nur der in Fahrtrichtung linke in den Zeichnungen dargestellt ist, über die seitlichen Schenkel 5, 6 und die Profilabschnitte 12 der Schenkel erstrecken und an den an deren Enden angeordneten Schwenklagern 16 enden. Die Schwenklager 16 sind einteilig mit dem Rahmenvorderteil 4 an dieses angeformt und sind zur Aufnahme von an den Windabweiser-Ausstellarmen 15 angebrachten Schwenklagerzapfen 17 ausgebildet.

Die Schwenklager 16 in den beiden seitlichen Schenkeln 5, 6 des Rahmenvorderteils 4 sind jeweils paarweise angeordnet, so daß insgesamt vier Schwenklager 16 am Rahmen vorgesehen sind, von denen aus den Zeichnungen nur die beiden linksseitig angeordneten ersichtlich sind. Alle vier Schwenklager 16 und die zugehörigen vier Schwenklagerzapfen 17 befinden sich auf einer gemeinsamen (gedachten) Fluchtungsachse, die rechtwinklig zur (gedachten) senkrechten Mittellängsebene des Rahmens 3 verläuft.

Die Schwenklager 16 sind als nach oben offene, in den Profilabschnitten 12 der seitlichen Schenkel 5, 6 etwa senkrecht angeordnete Aufnahmenuten 18 für die an den Enden der Windabweiser-Ausstellarme 15 angebrachten Schwenklagerzapfen 17 ausgebildet.

Die Aufnahmenuten 18 erweitern sich unten jeweils zu einer zylindrischen Lageröffnung 19, die das eigentliche Schwenklager bildet, deren Durchmesser dem Durchmesser der Schwenklagerzapfen 17 angepaßt ist, d.h. nur geringfügig größer ist als der Zapfendurchmesser, um radialspielarme Drehungen der Schwenklagerzapfen 17 in den Lageröffnungen 19 zu ermöglichen. Der Durchmesser der Lageröffnungen 19 ist jedoch größer als die Nutweite der Aufnahmenuten 18. Um die Schwenklagerzapfen 17 dennoch in die Aufnahmenuten 18 einführen zu können, weisen die Schwenklagerzapfen 17 jeweils zwei gegenüberliegende zueinander planparallele Abflachungen 20 auf, deren gegenseitiger Abstand etwas geringer ist als die Nutweite der Aufnahmenuten 18. Diese Abmessungsverhältnisse sind in den Fig. 6 und 7 verdeutlicht. Die Anordnung nur einer Abflachung an den Schwenklagerzapfen 17 ist bei sonst gleicher Funktionsfähigkeit ebenfalls möglich.

Die Position der Abflachungen 20 an den Schwenklagerzapfen 17 ist bezogen auf die in den Zeichnungen dargestellte Ruhestellung des Windabweisers 14 so gewählt, daß sie dabei etwa horizontal angeordnet sind. Zur Einführung der Schwenklagerzapfen 17 in die Aufnahmenuten 18 bei Anbringung (bzw. Abnahme) des Windabweisers 14 ist dieser so zu positionieren, daß seine Ausstellarme 15 etwa senkrecht nach unten weisen. Hierbei nehmen die Abflachungen 20 etwa die in Fig. 6 gezeigte Lage ein. Die Schwenklagerzapfen 17 lassen sich jetzt in die Aufnahmenuten 18 einführen. Sind die Schwenklagerzapfen 17 in die Lageröffnungen 19 vollständig eingetreten, was der in Fig. 6 strichpunktiert angegebenen Position entspricht, kann der Windabweiser in Fahrtrichtung nach vorn geschwenkt werden, wobei sich die Schwenklagerzapfen 17 in den Lageröffnungen 19 drehen. Schon geringe Schwenkwinkel der Ausstellarme 15 verriegeln die Schwenklagerung, d.h. die Schwenklagerzapfen 17 können dann nicht in den Aufnahmenuten 18 nach oben geführt werden.

Wie aus Fig. 4 deutlich wird, ist der Abstand zwischen den Stirnflächen der Schwenklagerzapfen 17 etwas geringer als der Abstand zwischen den zugehörigen Nutgrundflächen 21 der Aufnahmenuten 18. Auf diese Weise ergibt sich ein nur geringes Axialspiel der Schwenklagerung des Windabweisers 14. Die Schwenklager, d.h. die Aufnahmenuten 18 und die Lageröffnungen 19 sind in Wandungsvorsprüngen 22 des Profilabschnitts 12 des Rahmenvorderteils 4 eingeformt.

Im gezeichneten Beispiel ist der Windabweiser 14 mit seinen Ausstellarmen 15 und auch mit den Schwenklagerzapfen 17 einteilig aus einem geeigneten Kunststoff spritzgeformt.

Aus den Fig. 2 und 4, insbesondere aber aus Fig. 4, ist am Beispiels des Rahmenseitenteils 7 zu entnehmen, daß die Rahmenseitenteile neben dem Wasserkanal 11 noch eine Führungsschienenprofilierung für die verschiebbare Führung des Deckels 2 bzw. von mit dem Deckel 2 üblicherweise verbundenen Gleitelementen (nicht dargestellt) aufweisen und auch zwei Führungskanäle 23 für (ebenfalls nicht dargestellte) flexible Antriebskabel, die darin drucksteif geführt sind. Die Antriebskabel bewirken die verschiedenen Deckelbewegungen, sie sind aber hier ebenso wie die zugehörige Antriebsvorrichtung nicht näher zu erläutern, weil das Antriebssystem für den Deckel nicht Teil der vorliegenden Erfindung ist. Auch die Ausbildung und Anbringung von Ausstellfedern für den Windabweiser ist nicht dargestellt.

Vorgeschlagen wird ein Rahmen für Fahrzeugschiebedächer, dessen Rahmenvorderteil aus einem geeigneten Kunststoff einteilig spritzgeformt ist und dabei angeformte seitliche Schenkel für den Anschluß von Rahmenseitenteilen aufweist. In das Rahmenvorderteil bzw. die seitlichen Schenkel sind angeformte Schwenklager für die Lagerung der Ausstellarme eines am Rahmenvorderteil angeordneten Windabweisers integriert. Die Anbringung des Windabweisers an den Schwenklagern kann auf besondere Weise ohne Zuhilfenahme von getrennten Befestigungsmitteln erfolgen, indem die Schwenklager und die zugehörigen Schwenklagerzapfen des Windabweisers nach Art von sogenannten Drehfallen ausgebildet sind.

### Bezugszeichenliste

- 1: feste Dachfläche
- 2: Schiebedeckel
- 3: Rahmen
- 4: Rahmenvorderteil
- 5: seitlicher Schenkel
- 6: seitlicher Schenkel
- 7: Rahmenseitenteil
- 8: Rahmenseitenteil
- 9: Rahmenquerteil
- 10: Wasserkanal
- 11: Wasserkanäle
- 12: Profilabschnitt
- 13: Rohrstutzen
- 14: Windabweiser
- 15: Windabweiser-Ausstellarme
- 16: Schwenklager
- 17: Schwenklagerzapfen
- 18: Aufnahmenuten
- 19: Lageröffnung
- 20: Abflachungen
- 21: Nutgrundflächen
- 22: Wandungsvorsprünge
- 23: Führungskanäle

## Patentansprüche

1. Rahmen für ein Fahrzeugschiebedach, umfassend ein aus Kunststoff geformtes Rahmenvorderteil (4) mit zwei einteilig angeformten seitlichen Schenkeln (5, 6), mit denen nach hinten verlaufende Rahmenseitenteile (7, 8) verbunden sind, wobei die Rahmenteile (4, 7, 8) nach oben offene Wasserkanäle (10, 11) aufweisen, von denen der im Rahmenvorderteil (4) vorgesehene Wasserkanal (10) einen Windabweiser (14) in seiner nicht ausgestellten Ruhestellung aufnimmt, **dadurch gekennzeichnet, daß** die Schwenklager (16) für den Windabweiser (14) einteilig mit dem Rahmenvorderteil (4) an dieses angeformt sind und zur Aufnahme von an den Windabweiser-Ausstellarmen (15) angebrachten Schwenklagerzapfen (17) ausgebildet sind.

2. Rahmen nach Anspruch 1, **dadurch gekennzeichnet, daß** die Schwenklager (16) in den beiden seitlichen Schenkeln (5, 6) des Rahmenvorderteils (4) jeweils paarweise angeordnet sind, wobei sich alle Schwenklager (16) auf einer gemeinsamen rechtwinklig zur senkrechten Mittellängsebene des Rahmens (3) verlaufenden Fluchtungsachse befinden.

3. Rahmen nach Anspruch 1 oder 2, **dadurch gekennzeichnet, daß** die Schwenklager (16) als nach oben offene in den seitlichen Schenkeln (5, 6) angeordnete Aufnahmenuten (18) für an den Enden der Windabweiser-Ausstellarme (15) angebrachte Schwenklagerzapfen (17) ausgebildet sind.

4. Rahmen nach Anspruch 3, **dadurch gekennzeichnet, daß** die Aufnahmenuten (18) sich unten jeweils zu einer zylindrischen Lageröffnung (19) erweitern, deren den Schenklagerzapfen (17) angepaßter Durchmesser größer ist als die Weite der Aufnahmenuten (18), und daß die Schwenklagerzapfen (17) jeweils zwei gegenüberliegende und planparallele Abflachungen (20) aufweisen, deren gegenseitiger Abstand etwas geringer ist als die Weite der Aufnahmenuten (18).

5. Rahmen nach Anspruch 4, **dadurch gekennzeichnet, daß** die Abflachungen (20) an den Schwenklagerzapfen (17) bezogen auf die Ruhestellung des Windabweisers (14) etwa horizontal angeordnet sind.

6. Rahmen nach einem der Ansprüche 3 bis 5, **dadurch gekennzeichnet, daß** der Abstand zwischen den Stirnflächen der Schwenklagerzapfen (17) an jedem Ausstellarm (15) etwas geringer ist, als der Abstand zwischen den zugehörigen Nutgrundflächen (21) der Aufnahmenuten (18).

7. Rahmen nach einem der Ansprüche 1 bis 6, **dadurch gekennzeichnet, daß** die Schwenklager (16) in Wandungsvorsprünge (22) des Rahmenvorderteils (4) eingeformt sind.

8. Rahmen nach einem der Ansprüche 1 bis 7, **dadurch gekennzeichnet, daß** auch der Windabweiser (14) mit seinen Ausstellarmen (15) und den Schwenklagerzapfen (17) einteilig aus Kunststoff geformt ist.

## Claims

1. Frame for a vehicle sliding roof, comprising a frame front member (4) molded from plastic having two integrally molded-on side arms (5, 6), to which frame side members (7, 8) running rearwards are connected, the frame members (4, 7, 8) having water channels (10, 11) open at the top, of which the water channel (10) provided in the frame front member (4) accommodates a wind deflector (14) in its undeployed rest position, **characterized in that** the swivel bearings (16) for the wind deflector (14) are integrally formed on to the frame front member (4) and are designed to receive swivel bearing pivot pins (17) fitted to the wind deflector deployment arms (15).

2. Frame according to Claim 1, **characterized in that** the swivel bearings (16) in the two side arms (5, 6) of the frame front member (4) are in each case arranged in pairs, wherein all swivel bearings (16) are situated on a common axis of alignment running at right-angles to the vertical center longitudinal plane of the frame (3).

3. Frame according to Claim 1 or 2, **characterized in that** the swivel bearings (16) are designed as receiving slots (18), open at the top and arranged in the side arms (5, 6), for the swivel bearing pivot pins (17) fitted to the ends of the wind deflector deployment arms (15).

4. Frame according to Claim 3, **characterized in that** the receiving slots (18) each widen at the bottom to a cylindrical bearing aperture (19), the diameter of which is matched to the swivel bearing pivot pins (17) and is greater than the width of the receiving slots (18), and that the swivel bearing pivot pins (17) in each case have two opposing plane-parallel flattened portions (20), the distance between which is somewhat less than the width of the receiving slots (18).

5. Frame according to Claim 4, **characterized in that** the flattened portions (20) on the swivel bearing pivot pins (17) are arranged approximately horizontally when the wind deflector (14) is in the rest position.

6. Frame according to one of Claims 3 to 5, **characterized in that** the distance between the end faces of the swivel bearing pivot pins (17) on each deployment arm (15) is somewhat smaller than the distance between the associated slot base surfaces (21) of the receiving slots (18).

7. Frame according to one of Claims 1 to 6, **characterized in that** the swivel bearings (16) are molded into wall projections (22) of the frame front member (4).

8. Frame according to one of Claims 1 to 7, **characterized in that** the wind deflector (14) is integrally formed with its deployment arms (15) and the swivel bearing pivot pins (17) from plastic.

## Revendications

1. Cadre pour un toit coulissant de véhicule, comprenant une partie avant de cadre (4) réalisée par moulage en matière plastique, sur lequel sont formées d'un seul tenant par moulage des branches latérales (5, 6) auxquelles sont reliées des parties latérales de cadre (7, 8) s'étendant vers l'arrière, les parties de cadre (4, 7, 8) présentant des canaux d'eau (10, 11) ouverts vers le haut, dont le canal d'eau (10) prévu dans la partie avant de cadre (4) reçoit un déflecteur d'air (14) dans sa position de repos non déployée vers l'extérieur, **caractérisé en ce que** les paliers de pivotement (16) pour le déflecteur d'air (14) sont formés d'un seul tenant avec la partie avant de cadre (4) en y étant réalisés par moulage, et sont conçus pour recevoir des tourillons de palier de pivotement (17) placés sur les bras de déploiement de déflecteur d'air (15).

2. Cadre selon la revendication 1, **caractérisé en ce que** les paliers de pivotement (16) sont agencés dans chacune des deux branches latérales (5, 6) de la partie avant de cadre (4) respectivement par paire, tous les paliers de pivotement (16) se situant sur un axe d'alignement commun, qui s'étend perpendiculairement au plan longitudinal médian, vertical, du cadre (3).

3. Cadre selon la revendication 1 ou 2, **caractérisé en ce que** les paliers de pivotement (16) sont réalisés sous la forme de rainures de réception (18) ouvertes vers le haut, agencées dans les branches latérales (5, 6) et destinées à des tourillons de palier de pivotement (17) placés aux extrémités des bras de déploiement de déflecteur d'air (15).

4. Cadre selon la revendication 3, **caractérisé en ce que** les rainures de réception (18) s'élargissent chacune dans le bas en une ouverture de palier (19) cylindrique dont le diamètre adapté aux tourillons de palier de pivotement (17) est supérieur à la largeur des rainures de réception (18), et **en ce que** les tourillons de palier de pivotement (17) présentent chacun deux méplats plans (20) opposés et parallèles, dont l'espacement réciproque est légèrement inférieur à la largeur des rainures de réception (18).

5. Cadre selon la revendication 4, **caractérisé en ce que** les méplats (20) sont agencés sur les tourillons de palier de pivotement (17) de manière sensiblement horizontale en se référant à la position de repos du déflecteur d'air (14).

6. Cadre selon l'une des revendications 3 à 5, **caractérisé en ce que** la distance entre les surfaces frontales des tourillons de palier de pivotement (17) sur chaque bras de déploiement (15), est légèrement inférieure à la distance entre les surfaces de fond de rainure (21) correspondantes des rainures de réception (18).

7. Cadre selon l'une des revendications 1 à 6, **caractérisé en ce que** les paliers de pivotement (16) sont formés par moulage dans des proéminences de paroi (22) de la partie avant de cadre (4).

8. Cadre selon l'une des revendications 1 à 7, **caractérisé en ce que** le déflecteur d'air (14) est également réalisé d'un seul tenant avec ses bras de déploiement (15) et les tourillons de palier de pivotement (17), en matière plastique, par moulage.
